(19) Europäisches Patentamt / European Patent Office / Office européen des brevets

(11) **EP 3 359 840 B1**

(12) **EUROPÄISCHE PATENTSCHRIFT**

(45) Veröffentlichungstag und Bekanntmachung des Hinweises auf die Patenterteilung:
**11.12.2019 Patentblatt 2019/50**

(51) Int Cl.:
**F16D 55/2255** *(2006.01)* **F16D 65/56** *(2006.01)*

(21) Anmeldenummer: **16787754.7**

(22) Anmeldetag: **10.10.2016**

(86) Internationale Anmeldenummer:
**PCT/EP2016/074160**

(87) Internationale Veröffentlichungsnummer:
**WO 2017/060516 (13.04.2017 Gazette 2017/15)**

(54) **ELEKTRISCHE VERSCHLEISSNACHSTELLVORRICHTUNG EINER SCHEIBENBREMSE, EINE ENTSPRECHENDE SCHEIBENBREMSE UND VERFAHREN ZUM LÜFTSPIELMESSEN, -EINSTELLEN UND VERSCHLEISSMESSEN**

ELECTRIC WEAR-ADJUSTING DEVICE OF A DISC BRAKE, A CORRESPONDING DISC BRAKE, AND METHOD FOR MEASURING AND SETTING THE AIR PLAY AND FOR MEASURING WEAR

DISPOSITIF ÉLECTRIQUE DE RATTRAPAGE D'USURE D'UN FREIN À DISQUE, FREIN À DISQUE ASSOCIÉ ET PROCÉDÉ DE MESURE ET DE RÉGLAGE DU JEU ET DE MESURE DE L'USURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.10.2015 DE 102015117252**

(43) Veröffentlichungstag der Anmeldung:
**15.08.2018 Patentblatt 2018/33**

(73) Patentinhaber: **KNORR-BREMSE Systeme für Nutzfahrzeuge GmbH**
**80809 München (DE)**

(72) Erfinder:
• **FUCHS, Alexander**
**81677 München (DE)**
• **THEIL, Robert**
**82299 Türkenfeld (DE)**
• **MLINARCSEK, Csaba**
**1165 Budapest (HU)**
• **TOTH, Janos**
**6000 Kecskemét (HU)**
• **KOVACSIK, Peter**
**1149 Budapest (HU)**
• **TRIMPE, Robert**
**82234 Weßling (DE)**

(56) Entgegenhaltungen:
**EP-A1- 1 386 092 DE-A1-102012 003 506**

EP 3 359 840 B1

**Beschreibung**

Die Erfindung betrifft eine elektrische Verschleißnachstellvorrichtung einer Scheibenbremse, insbesondere für ein Kraftfahrzeug, nach dem Oberbegriff der Ansprüche 1 und 3.

Die Erfindung bezieht sich auch auf eine entsprechende Scheibenbremse und ein Verfahren zum Messen und Einstellen von Lüftspiel und Messen von Verschleiß einer solchen Scheibenbremse.

Fahrzeuge, insbesondere Kraftfahrzeuge, sind mit Reibungsbremsen ausgestattet, um kinetische Energie umzuwandeln. Bevorzugt wird dabei speziell im Personenkraftwagen- und im Nutzfahrzeugbereich die Scheibenbremse. Bei der typischen Bauform einer Scheibenbremse besteht diese aus einem Bremssattel samt innerer Mechanik, aus in der Regel zwei Bremsbelägen und der Bremsscheibe. Auf die innere Mechanik werden über einen pneumatisch betätigten Zylinder die Zylinderkräfte eingeleitet, durch einen Exzentermechanismus verstärkt und als Zuspannkraft über Gewindespindeln auf Bremsbeläge und Bremsscheibe übertragen, wobei über die Gewindespindeln der Verschleiß von Bremsscheibe und Bremsbelägen ausgeglichen wird.

Die Zuspannkräfte wirken über beide Bremsbeläge auf die Bremsscheibe. Da die Beläge konstruktiv als Verschleißteile ausgelegt werden, sind diese generell weicher als die Bremsscheibe, d.h. die Beläge erfahren über Ihre Gebrauchsdauer eine Änderung der Belagstärke, sie verschleißen. Auch die Bremsscheibe kann verschleißen. Aus diesem Verschleiß ergibt sich die Notwendigkeit, dass eine Verschleißnachstellung die Änderung durch den Verschleiß ausgleicht und somit ein konstantes Luftspiel einstellt. Ein konstantes Luftspiel wird benötigt, um die Ansprechzeiten der Bremse klein zuhalten, die Freigängigkeit der Bremsscheibe zu gewährleisten und eine Hubreserve für Grenzbelastungsfälle vorzuhalten.

Dokument DE 10 2012 003506 A1 offenbart eine elektrische Verschleißnachstellvorrichtung einer Scheibenbremse.

Ein Beispiel einer Verschleißnachstellvorrichtung beschreibt das Dokument DE 10 2004 037 771 A1. Dabei wird eine Antriebsdrehbewegung z.B. von einer Drehmoment-Begrenzungseinrichtung, beispielsweise mit einer Kugelrampe, über eine kontinuierlich wirkende Kupplung (Rutschkupplung) auf eine Verstellspindel eines Druckstempels weitergeleitet. Das Luftspiel wird dabei kontinuierlich eingestellt.

Ein Beispiel einer Nachstelleinrichtung beschreibt das Dokument DE 10 2012 108 672 B3.

Als nachteilig wird dabei angesehen, dass bei einem mechanischen Nachsteller ein zu kleines oder ein zu großes Lüftspiel nicht im optimalen Bereich gehalten und nicht situationsbedingt angepasst werden kann. Dabei kann bei einem zu kleinen Lüftspiel ein so genanntes Schleifen mit einem Schleifmoment entstehen, welches frühzeitigen Verschleiß von Bremsbelägen und Bremsscheibe wie auch einen höheren Kraftstoffverbrauch zur Folge haben kann.

Geometrisch wird ein so genanntes konstruktives Lüftspiel innerhalb der Fertigungstoleranzen der Bauteile abgebildet, wobei die ungünstigste Kombination der Bauteilmaße, Wärmedehnung der Bauteile und elastische Verformung vorgehalten werden muss, welche sich in der Prozessschwankung der Bauteilmaße, im Betrieb über die Temperaturen und Belastungen verändert und starke Spreizungen aufweisen kann.

DE10252301B4 beschreibt ein Beispiel zur Illustration einer Scheibenbremse mit elektrisch angetriebener Nachstellvorrrichtung.

Die Aufgabe der vorliegenden Erfindung besteht darin, eine verbesserte Nachstelleinrichtung zu schaffen, welche die oben genannten Nachteile verhindert oder zumindest erheblich verhindert.

Eine weitere Aufgabe ist, eine verbesserte Scheibenbremse bereitzustellen.

Eine noch weitere Aufgabe besteht darin, ein verbessertes Verfahren zum Lüftspielmessen, Lüftspieleinstellen und Verschleißmessen zu schaffen.

Die Aufgabe wird durch eine elektrische Verschleißnachstellvorrichtung mit den Merkmalen der Ansprüche 1 und 3, eine Scheibenbremse mit den Merkmalen des Anspruchs 13 und durch Verfahren mit den Merkmalen der Ansprüche 18 und 20 gelöst.

Es wird eine elektrische Verschleißnachstellvorrichtung geschaffen, welche ein Abtriebselement mit einer Spannhülse aufweist. Die Spannhülse kann für einen Direktantrieb eines Gewindestempels einer Scheibenbremse in einfacher Weise zur Nachstellung von Reibflächenverschleiß verwendet werden.

Eine erfindungsgemäße elektrische Verschleißnachstellvorrichtung einer Scheibenbremse, insbesondere für ein Kraftfahrzeug, zur Nachstellung eines Reibflächenverschleißes an Bremsbelägen und Bremsscheibe einer Scheibenbremse, insbesondere für ein Kraftfahrzeug, mit einer Zuspannvorrichtung, vorzugsweise mit einem Bremsdrehhebel, umfasst einen Elektromotor; ein Getriebe; und ein Abtriebselement. Das Abtriebselement ist mit einer Spannhülse drehfest verbunden, wobei die Spannhülse an ihrer Innenseite nach innen hervorstehende Längsrippen aufweist. Insbesondere kann es sich bei dem Kraftfahrzeug um ein Nutzfahrzeug handeln.

Alternativ kann in einer Ausführungsform bei einer Scheibenbremse mit zwei Stempeln der Getriebeabtrieb direkt mit dem Kettenrad der Synchronisationseinheit in Eingriff gebracht werden. Unter dem Kettenrad kann dabei ein Synchronrad verstanden werden. Dabei ist der Getriebeabtrieb formschlüssig in Umfangsrichtung mit dem Kettenrad verbunden. Durch die formschlüssige Verbindung kann die von der Nachstelleinheit eingebrachte Drehbewegung auf die Synchronisationseinheit und die Spindel übertragen werden. Die Verbindung zwischen Getriebeabtrieb und Kettenrad kann dabei mit einem Radialspiel ausgeführt sein, um Bewegungen der Brücke/Traverse im Betrieb von bis zu 1° auszugleichen.

In der alternativen Ausführung umfasst eine erfindungsgemäße elektrische Verschleißnachstellvorrichtung einer Scheibenbremse, insbesondere für ein Kraftfahrzeug, zur Nachstellung eines Reibflächenverschleißes an Bremsbelägen und Bremsscheibe einer Scheibenbremse, insbesondere für ein Kraftfahrzeug, mit einer Zuspannvorrichtung, vorzugsweise mit einem Bremsdrehhebel, einem Elektromotor, einem Getriebe und einem Abtriebselement.

Das Abtriebselement ist direkt mit einem Synchronrad drehfest verbunden, wobei das Synchronrad für einen drehfesten Eingriff mit einer Gewindespindel der zuzuordnenden Scheibenbremse ausgebildet ist.

Eine Variante dieser Ausführung zeichnet sich dadurch aus, dass das Abtriebselement mit dem Synchronrad einstückig ausgebildet ist, wodurch eine Teilezahl verringert wird.

Eine erfindungsgemäße Scheibenbremse, vorzugsweise druckluftbetätigt, insbesondere für ein Kraftfahrzeug, mit einer Zuspannvorrichtung, vorzugsweise mit einem Bremsdrehhebel, mindestens einer Spindeleinheit mit jeweils einem Gewindestempel, und mindestens einer elektrischen Verschleißnachstellvorrichtung mit einer Steuereinheit weist die oben beschriebene Verschleißnachstellvorrichtung auf.

Es ergibt sich eine raumsparende, kompakte und leicht und vorteilhaft einfach auf einem Gewindestempel zu montierenden Verschleißnachstellvorrichtung. Der Gewindestempel kann Längsnuten aufweisen, mit welchen die Längsrippen des Synchronrades in einfacher Weise in Eingriff zu bringen sind. Das Synchronrad ist weiter über eine radiale, formschlüssige Verbindung mit der Spannhülse in Eingriff, welche eine Längsverschieblichkeit zwischen Synchronrad und Spannhülse ermöglicht. Dies kann z.B. dadurch realisiert sein, dass die Spannhülse über Kugeln in einem Kugelkäfig mit dem Synchronrad in Eingriff steht, wobei das Synchronrad mit der Gewindespindel in Eingriff steht.

Dazu ist vorgesehen, dass die Spannhülse an ihrem freien Ende mit einem Eingriffsabschnitt ausgebildet ist, der einen Bestandteil einer drehfesten Kopplung der Spannhülse mit einem ersten Synchronrad einer Synchroneinheit der zuzuordnenden Scheibenbremse bildet.

Ein erfindungsgemäßes Verfahren zum Lüftspielmessen und Lüftspieleinstellen der oben beschriebenen Scheibenbremse umfasst die Verfahrensschritte (S20) Bereitstellen einer Verschleißnachstellvorrichtung mit einem Elektromotor und einem Getriebe; (S21) Messen des aktuellen Lüftspiels und Einstellen eines neuen Lüftspiels der Scheibenbremse; und (S22) Kommunizieren mit weiteren Verschleißnachstellvorrichtungen eines zuzuordnenden Fahrzeugs über Datenschnittstellen und Überprüfen und Plausibilisieren der Messungen und Einstellungen.

Ein weiteres erfindungsgemäßes Verfahren zum Verschleißmessen eines Reibverschleißes von Bremsbelägen und einer Bremsscheibe der oben beschriebenen Scheibenbremse umfasst die Verfahrensschritte

(S23) Festlegen einer Ausgangsstellung des Bremsbelags und Speichern der Ausgangsstellung in der Steuereinheit; (S24) Messen des Lüftspiels; (S26) Berechnen des Reibverschleißes anhand der gemessenen Werte des Lüftspiels mit dem Gesamtdrehwinkel $\alpha_{overall}$, der Getriebeübersetzung i, spezifiziertem Lüftspiel LS und Spindelsteigung p nach folgender Rechenvorschrift

$$x_{wear} = x_{initial} - \alpha_{overall} * i * p + LS$$

(S27) Entscheiden durch Vergleich des berechneten Reibverschleißes mit einem vorher festgelegten Wert, ob ein Belagwechsel erforderlich ist, wobei in dem Fall, dass noch kein Belagwechsel erforderlich ist, zu dem Verfahrensschritt (S25) zurückgesprungen wird; und (S28) Erzeugen einer Information über den erforderlichen Belagwechsel und Anzeigen und/oder Kommunizieren dieser Information.

In einer Ausführungsform der beiden beschriebenen Verfahren entsprechen sich der Schritt (S21) Messen des aktuellen Lüftspiels und Einstellen eines neuen Lüftspiels der Scheibenbremse des Verfahrens zum Lüftspielmessen und Lüftspieleinstellen und der als (S24) Messen des Lüftspiels des Verfahrens zum Verschleißmessen eines Reibverschleißes von Bremsbelägen und einer Bremsscheibe.

Dabei ist es von besonderem Vorteil, das Betriebswerte des Elektromotors als Parameter zur Berechnung des Lüftspiels und eines Anlegepunktes herangezogen werden können.

Das Lüftspiel kann auf ein notwendiges Minimum reduziert werden. Schleifmomente können in erheblichem Maße ausgeschlossen werden. Eine Standzeit von Bremsbelägen und Bremsscheibe kann vorteilhaft verlängert werden.

Weitere vorteilhafte Ausgestaltungen sind in den Unteransprüchen angegeben.

In einer Ausführung können eine Motorwelle des Elektromotors mit einem Antriebsritzel und das Abtriebselement koaxial angeordnet sein. Dadurch wird nur minimaler Bauraum beansprucht.

Weiterhin ist es in einer anderen Ausführung vorgesehen, dass das Getriebe ein zweistufiges Planetengetriebe

3

sein kann. Dadurch wird eine hohe Übersetzung erzielt, wodurch gleichzeitig eine hohe Selbsthemmung gegen selbsttätiges Verdrehen des Gewindestempels durch Vibrationen möglich ist.

In einer noch anderen Ausführung kann ein Gehäuse des Getriebes einen Befestigungsabschnitt zur ortsfesten Befestigung in einem Bremssattel der zuzuordnenden Scheibenbremse und einen Getriebeabschnitt, in welchem das zweistufige Planetengetriebe angeordnet ist, aufweisen. Dies ergibt einen kompakten Aufbau.

Zudem können in einer weiteren Ausführung der Befestigungsabschnitt und der Getriebeabschnitt des Getriebes einstückig ausgebildet sein, wobei der Getriebeabschnitt mit einer Innenverzahnung als Hohlrad des zweistufigen Planetengetriebes ausgebildet sein kann. Damit ist eine hohe Funktionalität auf engem Bauraum möglich.

Es ist in einer noch weiteren Ausführung vorgesehen, dass eine erste Getriebestufe des Getriebes mit dem Antriebsritzel des Elektromotors als Sonnenrad in Eingriff steht, wobei ein zweiter Planetenträger der zweiten Getriebestufe des Getriebes ein Bestandteil des Abtriebselementes sein kann. So lässt sich eine kompakte Bauweise ermöglichen.

In einer noch weiteren Ausführung ist vorgesehen, dass das Getriebe ein dreistufiges Getriebe sein kann. Dadurch wird eine sehr hohe Übersetzung erzielt, wodurch die Leistungsanforderungen an den Elektromotor herabgesetzt werden können. Noch allgemeiner formuliert kann es sich bei dem Getriebe um ein mehrstufiges Getriebe handeln. So kann das Getriebe entsprechend des Elektromotors und der Leistungsanforderung ausgelegt werden.

Wenn der Elektromotor ein hohes Rastmoment aufweist, kann ein Widerstand gegen ungewollte Verstellung des Gewindestempels aufgrund von Vibrationen erhöht werden.

In einer anderen Ausführung kann der Elektromotor ein elektronisch kommutierter (EC) Elektromotor sein. Damit können Drehzahl und Drehmoment des Elektromotors mittels marktüblicher kostengünstiger Regler bei hoher Qualität in weiten Bereichen einstellbar und situationsbedingt anpassbar sein.

In einer weiteren Ausführung der Scheibenbremse kann die Verschleißnachstellvorrichtung über dem Gewindestempel angeordnet sein, wobei die Spannhülse auf den Gewindestempel der mindestens einen Spindeleinheit der Scheibenbremse aufgesetzt ist und den Gewindestempel mindestens teilweise umschließt. Damit kann ein vorteilhaft kompakter Aufbau ermöglicht werden.

In einer Alternative, wobei die Scheibenbremse weiterhin eine erste Spindeleinheit mit einem ersten Gewindestempel und eine zweite Spindeleinheit mit einem zweiten Gewindestempel aufweist, wobei die Gewindestempel in einer Traverse eingeschraubt sind, wobei die Traverse mit der Zuspannvorrichtung, vorzugsweise mit dem Bremsdrehhebel, zusammenwirkt, und eine Synchroneinrichtung mit Synchronrädern, die in der Traverse angeordnet sind, kann die Verschleißnachstellvorrichtung über dem ersten Gewindestempel der ersten Spindeleinheit angeordnet sein, wobei die Spannhülse auf den ersten Gewindestempel der ersten Spindeleinheit aufgesetzt ist und den ersten Gewindestempel mindestens teilweise umschließt, und wobei ein freies Ende der Spannhülse mit einem Koppelabschnitt in einem ersten Synchronrad der Synchroneinheit mit dem ersten Synchronrad drehfest gekoppelt ist. Dies ergibt einen kompakten Aufbau.

In einer weiteren Ausführung der Scheibenbremse ist vorgesehen, dass die nach innen hervorstehenden Rippen der Spannhülse der Verschleißnachstellvorrichtung mit Längsnuten des ersten Gewindestempels in Eingriff stehen. Damit wird vorteilhaft eine drehfeste Verbindung zwischen Spannhülse und Gewindestempel ermöglicht, wobei der Gewindestempel relativ zur Spannhülse verschiebbar geführt ist.

In einer Alternative umfasst eine Scheibenbremse, vorzugsweise druckluftbetätigt, insbesondere für ein Kraftfahrzeug, eine Zuspannvorrichtung, vorzugsweise mit einem Bremsdrehhebel, mindestens eine elektrischen Verschleißnachstellvorrichtung mit einer Steuereinheit, eine erste Spindeleinheit mit einem ersten Gewindestempel und eine zweite Spindeleinheit mit einem zweiten Gewindestempel, wobei die Gewindestempel in einer Traverse eingeschraubt sind, wobei die Traverse mit der Zuspannvorrichtung, vorzugsweise mit dem Bremsdrehhebel, zusammenwirkt, und eine Synchroneinrichtung mit Synchronrädern, die in der Traverse angeordnet sind. Die Verschleißnachstellvorrichtung, welche oben als Alternative beschrieben ist, ist über dem ersten Gewindestempel der ersten Spindeleinheit angeordnet, wobei das Abtriebselement den ersten Gewindestempel mindestens teilweise umschließt, und wobei ein Koppelabschnitt des Abtriebselementes mit einem ersten Synchronrad der Synchroneinheit drehfest verbunden oder einstückig mit diesem ersten Synchronrad ausgebildet ist.

In dem Verfahren zum Lüftspielmessen und Lüftspieleinstellen ist vorgesehen, dass der Verfahrensschritt (S21) die folgenden Teilschritte aufweist: (S210) Zuspannen des Bremsbelags durch Einschalten des Elektromotors in einer ersten Drehrichtung durch die Steuereinheit; (S211) Zuspannen des Bremsbelags bis der Bremsbelag die Bremsscheibe in einem Anlegepunkt kontaktiert; (S212) Feststellen dieses Anlegepunktes bzw. dieses Kontaktierens durch Erfassen eines Stromanstiegs des Elektromotors), einen Kraftsensor, einen Abstandssensor oder/und einen Temperatursensor zur Erfassung einer Temperaturänderung auf der Oberfläche der Bremsscheibe oder/und des Bremsbelags; (S213) Anhalten der Drehbewegung des Elektromotors nach Feststellen des Anlegepunktes und Berechnen des Lüftspiels mit Systemparametern (Drehschritte, Drehwinkel, Drehwinkelposition, Axialposition, Getriebeübersetzung); (S214) Einschalten des Elektromotors in einer zur ersten Drehrichtung gegenläufigen zweiten Drehrichtung und Verstellen des Bremsbelag von der Bremsscheibe weg in eine Position, welche dem berechneten Lüftspiel entspricht; (S215) Speichern der Abweichung bzw. der ausgeführten Rotation, sowohl im Uhrzeigersinn als auch gegen den Uhrzeigersinn (Nachstellung), zur Berechnung des gesamten Drehwinkels zur Verschleißsensierung.

In einer Ausführung des Verfahrens zum Verschleißmessen ist vorgesehen, dass im Verfahrensschritt (S24) Messen des Lüftspiels der Verfahrensschritt Messen des Lüftspiels nach dem oben beschriebenen Verfahren zum Lüftspielmessen und Lüftspieleinstellen mit einer festgelegten Häufigkeit durchgeführt wird.

Die Erfindung wird nun anhand beispielhafter Ausführungen mit Bezug auf die beigefügten Zeichnungen näher erläutert. Hierbei zeigen:

Fig. 1    eine schematische Schnittansicht eines Ausführungsbeispiels einer erfindungsgemäßen Scheibenbremse mit einem Ausführungsbeispiel einer erfindungsgemäßen Verschleißnachstellvorrichtung;

Fig. 2    eine schematische Schnittansicht eines Ausführungsbeispiels der erfindungsgemäßen Verschleißnachstellvorrichtung nach Fig. 1;

Fig. 3    eine schematische Schnittansicht eines weiteren Ausführungsbeispiels der erfindungsgemäßen Verschleißnachstellvorrichtung nach Fig.1;

Fig. 4    eine schematische Darstellung des zweistufigen Planetengetriebes; und

Fig. 5-6    schematische Flussdiagramme eines erfindungsgemäßen Verfahrens.

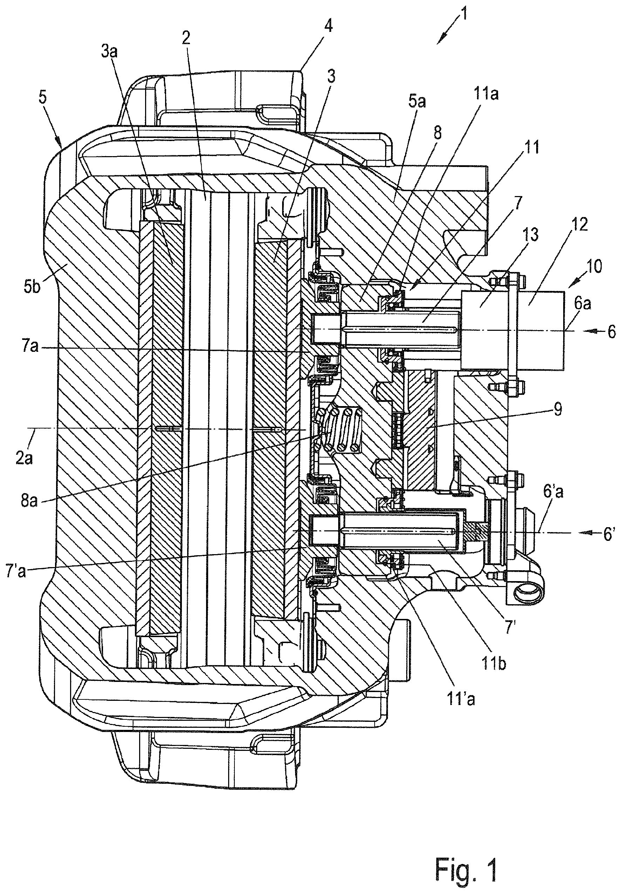

In **Fig. 1** ist eine schematische Schnittansicht eines Ausführungsbeispiels einer erfindungsgemäßen Scheibenbremse 1 mit einem Ausführungsbeispiel einer erfindungsgemäßen Verschleißnachstellvorrichtung 10 dargestellt.

Die Scheibenbremse 1 weist eine Bremsscheibe 2 mit einer Bremsscheibenachse 2a auf. Beiderseits der Bremsscheibe 2 ist ein jeweils ein Bremsbelag 3, 3a angeordnet. Die Bremsbeläge 3, 3a sind in Belagschächten eines Bremsträgers 4 aufgenommen. Die Bremsscheibe 2 ist von einem, hier als Schwimmsattel ausgeführten, Bremssattel 5 übergriffen. Der Bremssattel 5 weist einen Zuspannabschnitt 5a und einen Rückenabschnitt 5b auf und ist an dem Bremsträger 4 über nicht näher bezeichnete Lagerungen (Festlager, Loslager) in Richtung der Bremsscheibenachse 2a verschiebbar angebracht.

Der neben dem Zuspannabschnitt 5a des Bremssattels 5 befindliche Bremsbelag 3 wird zuspannseitiger Bremsbelag 3 und der am Rückenabschnitt 5b des Bremssattels 5 angeordnete Bremsbelag 3a wird rückenseitiger oder reaktionsseitiger Bremsbelag 3a genannt.

In diesem Ausführungsbeispiel ist die Scheibenbremse 1 als zweistempelige Bremse mit einer ersten Spindeleinheit 6 und einer zweiten Spindeleinheit 6' mit jeweils einer Spindelachse 6a, 6'a ausgebildet. Die Spindelachsen 6a, 6'a verlaufen parallel zueinander und parallel zu der Bremsscheibenachse 2a. Die erste Spindeleinheit 6 weist einen ersten Gewindestempel 7 und die zweite Spindeleinheit 6' weist einen zweiten Gewindestempel 7' auf. Die Gewindestempel 6, 6' sind hier als Vollwelle mit Außengewinde ausgebildet.

Der zuspannseitige Bremsbelag 3 steht mit den Spindeleinheiten 6, 6' über Druckstücke 7a, 7'a, die an Enden der Gewindestempel 7, 7' angeordnet sind, in Verbindung. Der andere, reaktionsseitige Bremsbelag 3a ist auf der anderen Seite der Bremsscheibe 2 in dem Rückenabschnitt 5a des Bremssattels 5 festgelegt. Die Gewindestempel 7, 7' sind jeweils mit ihren Außengewinden in einer Traverse 8, die auch als Brücke bezeichnet wird, in Innengewinden der Traverse 8 verdrehbar angeordnet.

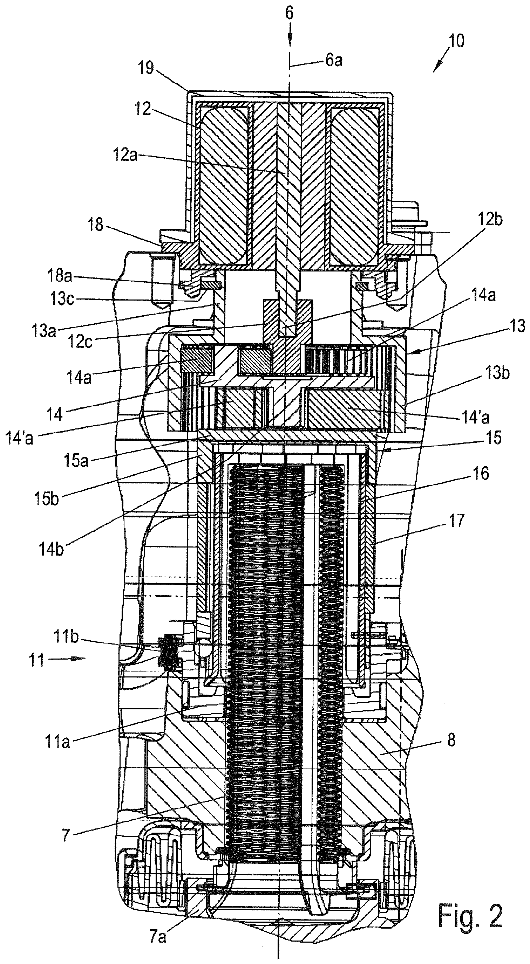

Die Gewindestempel 7, 7' weisen jeweils ein belagseitiges Wellenende und ein zuspannseitiges Wellenende auf. Jeweils ein belagseitiges Wellenende steht jeweils mit einem Druckstück 7a, 7'a in Verbindung. Weiterhin sind die Gewindestempel 7, 7' jeweils mit einer Anzahl von hier nicht bezeichneten Axialnuten (in Fig. 2 deutlich zu erkennen) versehen, welche sich in diesem Ausführungsbeispiel jeweils von dem zuspannseitigen Wellenende bis zu dem jeweiligen belagseitigen Wellenende am jeweiligen Umfang des Gewindestempels 7, 7' in dessen Längsrichtung erstrecken. Fast die gesamte Länge des Gewindestempels 7, 7' bis auf die belagseitigen Wellenenden ist mit dem Außengewinde versehen.

Die Traverse 8 und somit die Gewindestempel 7, 7' sind von einer Zuspannvorrichtung, hier ein Bremsdrehhebel 9 betätigbar. Der Bremsdrehhebel 9 ist hier um eine nicht gezeigte Achse, die rechtwinklig zur Bremsscheibenachse 2a verläuft, verschwenkbar und weist einen Hebelkörper auf, welcher mit der Traverse 8 in Zusammenwirkung steht.

Die Traverse 8 ist in Richtung der Bremsscheibenachse 2a durch den Bremsdrehhebel 9 verstellbar. Eine Bewegung auf die Bremsscheibe 2 zu wird als Zuspannbewegung bezeichnet, und eine Bewegung in Gegenrichtung wird Lösebewegung genannt. Eine Rückstellfeder 8a ist in der Mitte der Traverse 8 in einer entsprechenden Ausnehmung auf der belagseitigen Seite der Traverse 8 aufgenommen und stützt sich am Bremssattel 3 ab. Mittels der Rückstellfeder 7 wird die Traverse 8 bei der Lösebewegung in die in Fig. 1 gezeigt gelöste Stellung der Scheibenbremse 1 verstellt.

Ein Abstand zwischen den Bremsbelägen 3, 3a und der Bremsscheibe 2 in der gelösten Stellung wird als Lüftspiel bezeichnet. Infolge von Belag- und Scheibenverschleiß wird dieses Lüftspiel größer. Wenn dies nicht kompensiert wird, kann die Scheibenbremse 1 ihre Spitzenleistung nicht erreichen, da ein Betätigungshub der Betätigungsmechanik, d.h. hier der Betätigungshub bzw. ein Schwenkwinkel des Bremsdrehhebels 9, vergrößert ist.

Die Scheibenbremse 1 kann unterschiedliche Kraftantriebe aufweisen. Der Drehhebel 9 wird hier z.B. pneumatisch betätigt. Zu Aufbau und Funktion einer pneumatischen Scheibenbremse 1 wird auf die entsprechende Beschreibung der DE 197 29 024 C1, insbesondere auf die DE 10 2012 108 672 B3 verwiesen.

Die erfindungsgemäße Verschleißnachstellvorrichtung 10 ist zur Verschleißnachstellung eines vorher festgelegten Lüftspiels, das als Nominallüftspiel bezeichnet wird, ausgebildet. Unter dem Begriff "Nachstellung" ist eine sowohl eine Lüftspielverkleinerung als auch eine Lüftspielvergrößerung zu verstehen. Das vorher festgelegte Lüftspiel ist im Regelfall frei wählbar und wird in einem Speicher einer nicht gezeigten aber leicht vorstellbaren Steuereinheit hinterlegt. Mit anderen Worten, die Verschleißnachstellvorrichtung 10 verkleinert ein vorhandenes Lüftspiel, wenn dieses in Bezug auf das vorher festgelegte Lüftspiel zu groß ist, und sie vergrößert ein vorhandenes Lüftspiel, wenn dieses in Bezug auf das vorher festgelegte Lüftspiel zu klein ist. Ein zu kleines Lüftspiel kann dazu führen, dass die Bremsbeläge 3, 3a zum Teil oder ganz mit der Bremsscheibe 2 in leichten Kontakt geraten, wodurch ein so genanntes Schleifmoment hervorgerufen wird. Daraus können sich erhöhter Verschleiß von Bremsscheibe 2 und Bremsbelägen 3, 3a eine zusätzliche Belastung der Umwelt insbesondere durch Feinstaub, wie auch erhöhter Kraftstoffverbrauch des Fahrzeugs mit dieser Bremse ergeben, da das Schleifmoment auch eine bestimmte Bremswirkung erzeugt.

Die Verschleißnachstellvorrichtung 10 umfasst hier einen Elektromotor 12 und ein Getriebe 13. Die Verschleißnachstellvorrichtung 10 ist an der ersten Spindeleinheit 6 koaxial zu dieser, zu dem ersten Gewindestempel 7 und der ersten Spindelachse 6a angeordnet und mit diesem ersten Gewindestempel 7 drehfest verbunden. Zur Nachstellung verdreht die Verschleißnachstellvorrichtung 10 den ersten Gewindestempel 7 um die erste Spindelachse 6a.

Da die Scheibenbremse 1 in dem hier gezeigten Ausführungsbeispiel eine zweistempelige Scheibenbremse 1 ist, ist eine Drehkopplung des ersten Gewindestempels 7 der ersten Spindeleinheit 6 mit dem zweite Gewindestempel 7' der zweiten Spindeleinheit 6' vorgesehen. Dies wird durch eine so genannte Synchroneinheit 11 realisiert, welche hier zwei Synchronräder 11a, 11'a und ein Synchronmittel 11b, hier eine Kette, aufweist.

Durch die im Falle einer Nachstellung von der Verschleißnachstellvorrichtung 10 erzeugte Drehbewegung der Gewindestempel 7, 7' in der Traverse 8 ändert sich die Axialposition der Gewindestempel 7, 7' relativ zu der Traverse 8. Mit dem Begriff Axialposition ist hier eine Position der Gewindestempel 7, 7' in Axialrichtung der Bremsscheibenachse 2a und der Spindelachsen 6a, 6'a gemeint.

Die Funktionsgruppen der Verschleißnachstellvorrichtung 10, welche unten noch ausführlich erläutert werden, sind in Richtung der ersten Spindelachse 6a zu einem Teil über dem ersten Gewindestempel 7 angeordnet. Dabei überdeckt ein anderer Teil der Verschleißnachstellvorrichtung 10 das zuspannseitige Wellenende des zugehörigen ersten Gewindestempels 7 und erstreckt sich zum belagseitigen Wellenende des ersten Gewindestempels 7 über etwa die Hälfte der gesamten Länge der Axialnuten des ersten Gewindestempels 6 und ist in diesem Bereich um den ersten Gewindestempel 7 herum angeordnet. Mit anderen Worten, die Verschleißnachstellvorrichtung 10 ist konzentrisch zu dem ersten Gewindestempel 7 angeordnet und umschließt diesen zumindest teilweise.

Der erste Gewindestempel 7 der ersten Spindeleinheit 6 und der zweite Gewindestempel 7' der zweiten Spindeleinheit 6' sind durch eine hier nicht näher beschriebene Synchroneinheit 11 gekoppelt, welche in der DE 10 2012 108 672 B3 im Detail erläutert ist, und worauf hier verwiesen wird. Die Synchroneinheit 11 ermöglicht, dass eine Verdrehbewegung des ersten Gewindestempels 7 um die erste Spindelachse 6a eine entsprechende Verdrehbewegung des zweiten Gewindestempels 6' um die zweite Spindelachse 6'a bewirkt wird und umgekehrt.

Die Synchroneinheit 11 ist hier auf einer Traversenoberseite der Traverse 8 zwischen der Traverse 8 und dem Bremsdrehhebel 9 angeordnet und umfasst das erste Synchronrad 11a, das mit dem ersten Gewindestempel 7 und somit auch mit der Verschleißnachstellvorrichtung 10 gekoppelt ist, das zweite Synchronrad 11'a, das mit dem zweiten Gewindestempel 7' gekoppelt ist, und das Synchronmittel 11b, mit welchem die Synchronräder 11a und 11'a gekoppelt sind. Das Synchronmittel 11b ist hier eine Kette. So sind die Synchronräder 11a, 11'a als Kettenräder ausgebildet. Damit ist eine synchrone Bewegung der Gewindestempel 7, 7' der Spindeleinheiten 6 und 6' bei Verschleißnachstellvorgängen (Antrieb durch die Verschleißnachstellvorrichtung 10) und Einstellungen bei Wartungsarbeiten, z.B. Belagwechsel, gewährleistet.

Jedes Synchronrad 11a, 11'a ist ortsfest in einer mit dem jeweils zugeordneten Syncrhonrad 11a, 11'a korrespondierenden, nicht näher bezeichneten Aufnahme in der Traverse 8 drehbar aufgenommen. Diese Aufnahmen weisen hier mit ihren Öffnungen zur Zuspannseite der Scheibenbremse 1, d.h. sie sind von der Traversenoberseite in die Traverse 8 eingeformt.

Zu Aufbau, Anordnung und Funktion der Synchronräder 11a, 11'a wird auf die Beschreibung der DE 10 2012 108 672 B3 verwiesen.

Hier soll nur kurz beschrieben werden, dass das erste Synchronrad 11a, welches der ersten Spindeleinheit 6 mit dem ersten Gewindestempel 7 und der Verschleißnachstellvorrichtung 10 zugeordnet ist, einen hohlzylinderförmigen Körper aufweist, der an seiner Innenwand mit einem sich axial in Richtung der ersten Spindelachse 6a erstreckenden Innenprofil ausgebildet ist. Dieses Innenprofil steht in Eingriff mit einer Spannhülse 16 (siehe Fig. 2), die sowohl mit dem ersten Gewindestempel 6 als auch mit der Verschleißnachstellvorrichtung 10 drehfest verbunden ist. Dies wird unten noch näher erläutert.

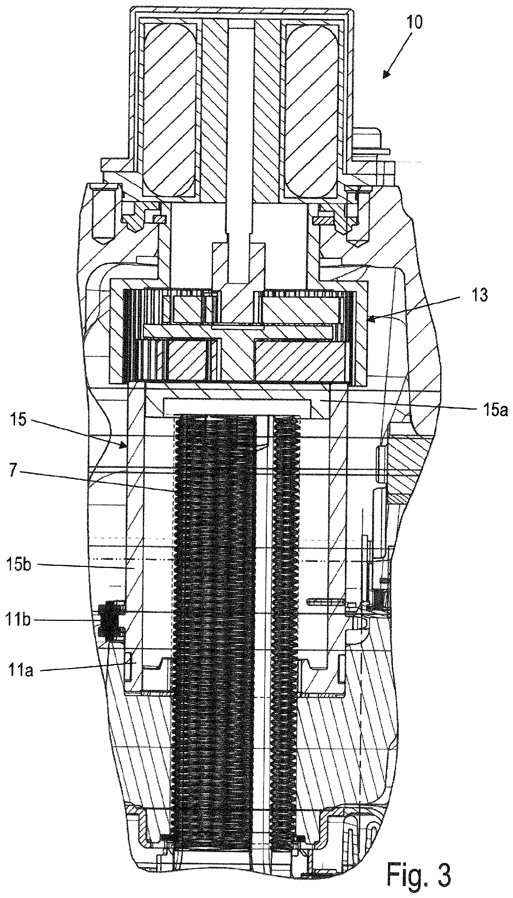

**Fig. 2** zeigt eine schematische Schnittansicht eines Ausführungsbeispiels der erfindungsgemäßen Verschleißnachstellvorrichtung 10 nach Fig. 1. In **Fig. 3** ist eine schematische Schnittansicht eines weiteren Ausführungsbeispiels der erfindungsgemäßen Verschleißnachstellvorrichtung 10 nach Fig.1 dargestellt.

Unter dem Begriff "oben" bzw. "Oberseite" ist die Seite des jeweiligen Bauteils zu verstehen, welche im eingebauten Zustand in der Scheibenbremse 1 zur Zuspannseite weist, d.h. von der Bremsscheibe 2 abgewandt ist. Die "Unterseite" des jeweiligen Bauteils bzw. "unten" weist dann zur Bremsscheibe 2.

Die Verschleißnachstellvorrichtung 10 umfasst den Elektromotor 12 und das Getriebe 13.

Der Elektromotor 12 weist eine Motorwelle 12a, ein Antriebsritzel 12c und ein Motorgehäuse 18 auf. Der Elektromotor 12 ist mit seinem Motorgehäuse 18 in einer Aufnahme des Zuspannabschnitts 5a des Bremssattels 5 oberhalb des ersten Gewindestempels 7 der ersten Spindeleinheit 6 angebracht, wobei der Elektromotor 12 zum Teil in die Aufnahme eingesetzt ist und seine Motorwelle 12a sich in die Aufnahme hinein erstreckt.

Das von dem Zuspannabschnitt 5a des Bremssattels 5 hervorstehende Motorgehäuse 18 des Elektromotors 12 ist durch eine Abdeckung 19 abgedeckt und gegen äußere Einflüsse geschützt. Die Abdeckung 19 und das Motorgehäuse 18 sind durch Befestigungsmittel, z.B. Schrauben, an dem Zuspannabschnitt 5a des Bremssattels 5 befestigt. Dadurch wird eine radiale und axiale Sicherung des Elektromotors 12 bewirkt.

Die Aufnahme für das Motorgehäuse 18 in dem Bremssattel 5 ist bevorzugt eine Bohrung, deren Mittellinie koaxial zu der Spindelachse 6a verläuft. Auf diese Weise kann der Elektromotor 12 so zentriert in dem Zuspannabschnitt 5a des Bremssattels 5 angeordnet werden, dass die Motorwelle 12a mit ihrer Drehachse, welche in der Längsrichtung der Motorwelle 12a verläuft, koaxial zur Spindelachse 6a angeordnet ist.

In einem Ausführungsbeispiel erfolgt eine Abdichtung der Nachstellvorrichtung durch ein Dichtelement, beispielsweise ein O-Ring, zwischen Motorgehäuse 18 und Bremssattel 5, in der schematischen Zeichnung nicht dargestellt.

In der Aufnahme ist außerdem das Getriebe 13 mit einem Befestigungsabschnitt 13a aufgenommen. Eine Axialfixierung des Getriebes 13 ist durch einen Sicherungsring 13c realisiert, welcher in Zusammenwirkung mit der Aufnahme und somit mit dem Bremssattel 5 und mit einem Befestigungsabschnitt 13a des Getriebes 13 steht. Der Befestigungsabschnitt 13a ist außerdem mittels einer Radialfixierung 18a gegen Verdrehen relativ zum Bremssattel 5 festgesetzt.

An der Unterseite des Elektromotors 12 steht die Motorwelle 12a mit einem Antriebsende 12b nach unten, d.h. in Richtung auf die Bremsscheibe 2 hin, hervor. Auf das Antriebsende 12b der Motorwelle 12a ist das Antriebsritzel 12c drehfest aufgebracht. Der von der Unterseite des Elektromotors 12 nach unten hervorstehende Abschnitt der Motorwelle 12a, das Antriebsende 12b und das Antriebsritzel 12c sind in einem Innenraum angeordnet, welcher von dem Befestigungsabschnitt 13a des Getriebes 13 umgeben und festgelegt ist.

Der Elektromotor 12 ist z.B. ein Schrittmotor. Natürlich kann der Elektromotor auch in einer anderen Ausführung ausgebildet sein, wie z.B. ein elektronisch kommutierter Motor (EC-Motor). Der Elektromotor 12 weist ein hohes Rastmoment auf, um unbeabsichtigte Verstellungen der Verschleißnachstellvorrichtung 10 durch mechanische Schwingungseinflüsse zu verhindern.

Das Getriebe 13 weist ein Gehäuse mit zwei übereinander angeordneten Abschnitten auf. Der erste, obere Abschnitt ist der Befestigungsabschnitt 13a, der hier kreiszylinderförmig ist und dessen Außendurchmesser mit einem Innendurchmesser der Aufnahme im Zuspannabschnitt 5a des Bremssattels 5 korrespondiert. An der Unterseite des Befestigungsabschnitts 13a ist ein kreiszylinderförmiger Getriebeabschnitt 13b angebracht, dessen Außendurchmesser etwa 1,5 mal so groß wie der Außendurchmesser des Befestigungsabschnitts 13a ist. Dieser kreiszylinderförmige Getriebeabschnitt 13b ist Bestandteil des Getriebes 13 und mit einer Innenverzahnung ausgebildet.

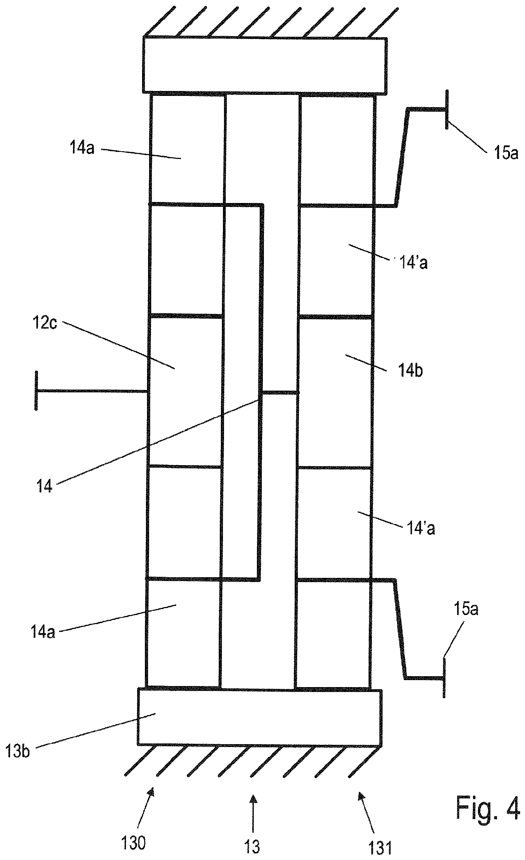

Das Getriebe 13 ist hier bevorzugt ein Planetengetriebe, insbesondere ein mehrstufiges Planetengetriebe. **Fig. 4** zeigt hierzu eine schematische Darstellung eines zweistufigen Planetengetriebes.

Das Getriebe 13 umfasst weiterhin einen ersten Planetenradträger 14 mit ersten Planetenrädern 14a, ein Abtriebselement 15 mit einem zweiten Planetenradträger 15a und zweiten Planetenrädern 14'a und ein Hohlrad. Die ersten Planetenräder 14a sind auf der Oberseite des ersten Planetenradträgers 14 angeordnet und stehen in Eingriff mit dem Antriebsritzel 12c des Elektromotors 12. Das Antriebsritzel 12c bildet hier das Sonnenrad einer ersten Getriebestufe 130 des Planetengetriebes. Damit ist die erste Getriebestufe 130 des Planetengetriebes gebildet. Die Innenverzahnung des Getriebeabschnitts 13b bildet das Hohlrad dieser ersten Getriebestufe 130 wie auch einer zweiten Getriebestufe 131 des Planetengetriebes.

Da das Gehäuse des Getriebes 13 mit dem Befestigungsabschnitt 13a ortsfest in dem Zuspannabschnitt 5a des Bremssattels 5 angeordnet ist, wobei der Getriebeabschnitt 13b fest mit dem Befestigungsabschnitt 13a verbunden ist, ist der Getriebeabschnitt 13b mit dem Hohlrad auch ortsfest angeordnet.

Der Planetenradträger 14 ist an seiner zur Bremsscheibe 2 weisende Seite mit einem nach unten weisenden zweiten Sonnenrad 14b der zweiten Planetengetriebestufe 131 versehen. Die zweite Planetengetriebestufe 131 ist unterhalb der ersten Planetengetriebestufe innerhalb des Getriebeabschnitts 13b angeordnet und weist zweite Planetenräder 14'a auf, die auf einer Oberseite des zweiten Planetenträgers 15a angeordnet sind und in Eingriff mit dem Sonnenrad 14b der zweiten Planetengetriebestufe 131 stehen. Sonnenrad 14b und zweite Planetenräder 14'a der zweiten Planetengetriebestufe 131 sind aus der Fig. 4 ersichtlich.

An der Unterseite des zweiten Planetenträgers 15a ist am Umfang eine umlaufende Wandung angeordnet, welche einen Verbindungsabschnitt 15b des Abtriebselementes 15 bildet. An der Innenseite der umlaufenden Wandung des Verbindungsabschnitts 15b ist ein oberer Abschnitt einer Spannhülse 16 angeordnet und mit diesem drehfest verbunden.

Die Wandung des Verbindungsabschnitts 15b erstreckt sich in Richtung der Spindelachse 6a nach unten in einer Länge, die in etwa der halben Länge des Getriebeabschnitts 13b in Richtung der Spindelachse 6a entspricht und dabei über dem zuspannseitigen Ende des Gewindestempels 7 angeordnet ist. Ein Außendurchmesser des Abtriebselementes 15 entspricht etwa dem 1,5fachen Außendurchmesser des Gewindestempels 6.

Die Spannhülse 16 umgibt den Gewindestempel 7 in der in Fig. 2 gezeigten Ausgangsstellung des Gewindestempels 7 in einer Länge, die in etwa der halben Länge des Gewindestempels 7 entspricht. Mit dem Begriff "Ausgangsstellung" ist die Situation gemeint, in welcher die Bremsbeläge 3, 3a neu sind und noch keine Verschleißnachstellung stattgefunden hat.

Die Spannhülse 16 ist derart ausgebildet, dass sie an ihrer Innenseite nach innen hervorstehende Längsrippen aufweist, die in Richtung der Spindelachse 6a verlaufen und in Eingriff mit jeweils einer Längsnut des Gewindestempels 7 stehen. Auf diese Weise ist der Gewindestempel 7 mit der Verschleißnachstellvorrichtung 10 drehfest verbunden. Der Eingriff der Längsrippen der Spannhülse 16 mit den Längsnuten des Gewindestempels 7 ermöglicht zudem eine Axialbewegung des Gewindestempels 7 relativ zu der axial ortsfesten Verschleißnachstellvorrichtung 10 bei Verstellbewegungen, die eine axiale Verstellung des Gewindestempels 7 wie oben beschrieben zur Folge haben.

Außerdem ist die Spannhülse 16 in dem dargestellten Ausführungsbeispiel an ihrem freien, unteren Ende mit einem Eingriffsabschnitt ausgebildet, der eine drehfeste Kopplung - hier über eine Kugel - mit dem ersten Synchronrad 11a der Synchroneinheit 11 ermöglicht. Dabei ist das untere Ende der Spannhülse 16 in das erste Synchronrad 11a eingesetzt.

Der Bereich der Spannhülse 16, welcher sich zwischen der Unterseite des Abtriebselementes 15 und dem ersten Synchronrad 11a befindet, ist hier durch eine Hülse 17, z.B. eine Kunststoffhülse, abgedeckt.

Beim Einbau der Verschleißnachstellvorrichtung 10 wird zunächst das Getriebe 13 mit dem Befestigungsabschnitt 13a von der Innenseite des Zuspannabschnitts 5a in die Aufnahme eingesetzt, mit dem Sicherungsring 13c axial und mit der Radialsicherung 18a radial festgelegt. Dann wird der Elektromotor 12 von außen angebracht, wobei sein Antriebsritzel 12c mit den ersten Planetenrädern 14a der ersten Getriebestufe des Getriebes 13 in dem Getriebeabschnitt 13b in Eingriff gebracht wird.

Die Gewindestempel 7, 7' werden z.B. vormontiert mit der Traverse 8 nach Einbau des Bremsdrehhebels 9 von der Bremsscheibenseite her in den Zuspannabschnitt 5a eingeführt, wobei der erste Gewindestempel 7 in die Spannhülse 16 der Verschleißnachstellvorrichtung 10 eingeschoben wird. Es ist auch möglich, dass das Getriebe 13 mit der Spannhülse 16 auf dem ersten Gewindestempel 7 vor dessen Einbau in den Zuspannabschnitt 5a des Bremssattels 5 schon aufgesetzt ist und nach Einbau der Traverse 8 und der Gewindestempel 7, 7' in der Aufnahme wie oben beschrieben fixiert wird.

In dem weiteren Ausführungsbeispiel, welches in Fig. 3 gezeigt ist, steht der Getriebeabtrieb der Verschleißnachstellvorrichtung 10 in direktem Eingriff mit dem Synchronrad 11a, beziehungsweise direkt mit dem Kettenrad der Synchroneinheit 11 in Eingriff. In diesem weiteren Ausführungsbeispiel ist der Koppelabschnitt 15b formschlüssig in Umfangsrichtung mit dem Synchronrad 11a verbunden oder mit diesem einstückig ausgebildet. In letzterem Fall kann der Koppelabschnitt 15b auch zusammen mit dem Kettenrad einstückig ausgebildet sein. Es ist auch denkbar, dass das Kettenrad auf den Koppelabschnitt 15b aufgebracht ist. So wird die von der Verschleißnachstellvorrichtung 10 eingebrachte Drehbewegung auf das Synchronrad 11a und von diesem auf den Gewindestempel 7 und über die Synchroneinheit 11 auf das andere Synchronrad 11'a und über dieses auf den anderen Gewindestempel 7' übertragen.

Die Verschleißnachstellvorrichtung 10 ist mit ihrem Elektromotor 12 als Antrieb mit einer nicht dargestellten, aber leicht vorstellbaren Steuereinheit verbunden. An die Steuereinheit sind weiterhin verschiedene Sensoren angeschlossen, welche der Steuereinheit Daten über verschiedene Zustände und Größen der Scheibenbremse 1 liefern. Diese Steuereinheit kann separat ausgeführt oder Bestandteil eines Bremssteuergerätes oder einer Motorsteuerung sein.

Derartige Sensoren können Daten über den Strom und/oder Schrittweite/Drehwinkel des Elektromotors 12, Kräfte in/an der Scheibenbremse, Stellungen und/oder Weg des Bremsdrehhebels 9 und/oder der Traverse 8 und/oder des Bremssattels 5 und/oder der Druckstücke 7a, 7'a, Temperaturen an unterschiedlichen Stellen der Scheibenbremse 1 u.dgl. mehr zur Verfügung stellen. Dazu ist es auch möglich, weitere Daten aus dem üblichen Bremssteuergerät und dem Motorsteuergerät des Fahrzeugs auszuwerten. Ebenso ist eine Sensierung der Schrittweite/Drehwinkel ohne zusätzliche Sensoren möglich. Hierbei werden motorinterne Parameter zur Drehwinkelbestimmung ausgewertet. Beispielsweise kann dies über die Gegen-EMK (Elektromotorische Kraft) des Elektromotors 12 realisiert werden. Auf diese Weise kann eine Erfassung eines Nachstellwertes bzw. eines Verschleißes vorgenommen werden.

So ist in einem Ausführungsbeispiel der Elektromotor 12 mit einem Steuergerät verbunden, welches Motorparameter wie Strom und/oder Spannung oder diese repräsentierende Signale empfängt und daraus ein Sensorsignal bestimmt. Die Einheit aus nicht dargestelltem Steuergerät und Elektromotor 12 bildet in einem solchen Ausführungsbeispiel einen Sensor, beziehungsweise stellt ein Signal bereit, welches mit einem Sensorsignal vergleichbar ist oder die selben Informationen wie sie ein Sensor liefert repräsentiert.

Im Falle eines vorhandenen Verschleißsensors können die vom Elektromotor 12 ermittelten Werte zur Plausibilisierung der Messwerte des Verschleißsensors herangezogen werden.

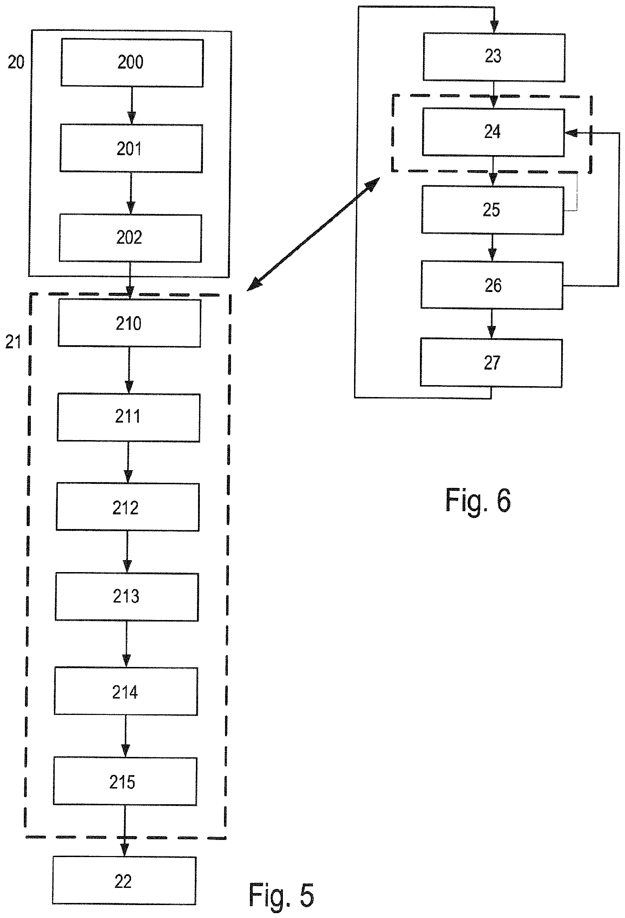

Hierzu zeigen **Fig. 5 und 6** schematische Flussdiagramme erfindungsgemäßer Verfahren, die mit der erfindungsgemäßen Verschleißnachstellvorrichtung der erfindungsgemäßen Scheibenbremse 1 durchgeführt werden können. In Fig. 5 ist ein schematisches Flussdiagramm eines Verfahrens zum Lüftspielmessen und Lüftspieleinstellen gezeigt. Fig. 6 zeigt ein schematisches Flussdiagramm eines Verfahrens zum Verschleißmessen

In einem ersten Verfahrensschritt 20 des Verfahrens zum Lüftspielmessen und Lüftspieleinstellen nach Fig. 5 wird eine Verschleißnachstellvorrichtung 10 bereitgestellt. Dabei wird in einem ersten Teilschritt 200 der Elektromotor 12 als Schrittmotor, EC-Motor oder dgl. mit elektrischen Eingangsgrößen Strom I in A und Spannung U in V und mechanischen Ausgangsgrößen Drehzahl n in Grad pro Sekunde und Abtriebsmoment M in Nm eingesetzt.

In einem zweiten Teilschritt 201 wird das Getriebe 13 mit den Eingangsgrößen Eingangsmoment $M_{in}$ in Nm und Eingangsdrehzahl $n_{in}$ in Umdrehungen pro Sekunde sowie Ausganggrößen Ausgangsmoment $M_{out}$ in Nm und Ausgangsdrehzahl $n_{out}$ in Umdrehungen pro Sekunde verwendet.

In einem dritten Teilschritt 202 wird ein definiertes Ausgangslüftspiel durch Speichern des resultierenden Drehwinkels in der Steuereinheit hinterlegt.

Ein zweiter Verfahrensschritt 21 dient zum Messen des aktuellen Lüftspiels und zum Einstellen eines neuen Lüftspiels der Scheibenbremse 1.

Dazu wird in einem ersten Teilschritt 210 der Elektromotor 12 in einer ersten Drehrichtung durch die Steuereinheit eingeschaltet, um über das Getriebe 13 eine Drehbewegung über die Spannhülse 16 auf die erste Gewindespindel 7 derart aufzubringen, dass diese den Bremsbelag 3, 3a zustellt, d.h. in Richtung auf die Bremsscheibe 2 bewegt.

In einem zweiten Teilschritt 211 wird die Drehbewegung des Elektromotors 12 weiter geführt, bis der Bremsbelag 3, 3a die Bremsscheibe 2 kontaktiert.

Eine Feststellung dieses Anlegepunktes bzw. dieses Kontaktierens wird in einem dritten Teilschritt 212 durch unterschiedliche Daten durchgeführt. Dies kann durch Erfassen eines Stromanstiegs des Elektromotors, einen Kraftsensor, einen Abstandssensor oder/und einen Temperatursensor zur Erfassung einer Temperaturänderung auf der Oberfläche der Bremsscheibe oder/und des Bremsbelags 3, 3a erfolgen. Ebenso kann der Anlegepunkt durch die Auswertung motorinternen Parameter erfolgen.

Nach Feststellung des Anlegepunktes wird die Drehbewegung des Elektromotors 12 in einem vierten Teilschritt 213 angehalten und das Lüftspiel mit Systemparametern (Drehschritte, Drehwinkel, Drehwinkelposition, Axialposition, Getriebeübersetzung) berechnet.

In einem fünften Teilschritt 214 wird der Elektromotor 12 in einer zur ersten Drehrichtung gegenläufigen zweiten Drehrichtung eingeschaltet, um den Bremsbelag 3, 3a von der Bremsscheibe 2 zurück zu bewegen, wobei dieser eine Position einnimmt, welche dem anhand der festgelegten Parameter definierten Lüftspiel entspricht.

Schließlich wird dann in einem sechsten Teilschritt 215 die Abweichung bzw. die ausgeführte Rotation, im Uhrzeigersinn (UZS) sowie gegen den Uhrzeigersinn, bei einer ausgeführten Nachstellung, in der Steuereinheit zur Aktualisierung des gesamten Drehwinkels hinterlegt. Die im sechsten Teilschritt 215 gespeicherte Abweichung oder ausgeführte Rotation wird zum Bestimmen des Verschleißes verwendet.

In einem dritten Verfahrensschritt 22 erfolgt eine Kommunikation mit weiteren Verschleißnachstellvorrichtungen des Fahrzeugs über Datenschnittstellen und eine Überprüfung und Plausibilisierung des Prozesses.

In dem Verfahren zum Verschleißmessen nach Fig. 6 wird in einem ersten Verfahrensschritt 23 eine Ausgangsstellung $x_{initial}$ des Bremsbelags 3, 3a festgelegt und in der Steuereinheit gespeichert.

In einem zweiten Verfahrensschritt 24 erfolgt das Messen des Lüftspiels, wie zum Beispiel in dem oben beschriebenen Verfahren nach Fig. 5.

Dabei wird das Lüftspielmessen und -einstellen in festgelegter Messhäufigkeit in einem Verfahrensschritt 25 ausgeführt, ausgelöst durch eine Anzahl von Bremsvorgängen, berechneter Bremsenergie, gemessener Temperatur (Bremsscheibe 2, Bremsbeläge 3, 3a u.a.).

In einem weiteren Verfahrensschritt 26 wird der Reibverschleiß (Belagverschleiß und Bremsscheibenverschleiß zusammen) anhand des Verfahrens zum Lüftspielmessen mit dem Gesamtdrehwinkel $\alpha_{overall}$, der Getriebeübersetzung i, aktuellem Lüftspiel LS und Spindelsteigung p wie folgt berechnet:

$$x_{wear} = x_{initial} - \alpha_{overall} * i * p + LS \qquad (1)$$

Ein nächster Verfahrensschritt 27 dient zur Entscheidung, ob ein Belagwechsel erforderlich wird. Dazu wird der im Verfahrensschritt 26 errechnete Verschleißwert mit einem vorher festgelegten Vergleichswert verglichen. Solange anhand dieses Vergleichs kein Belagwechsel erforderlich ist, wird zu dem Verfahrensschritt 24 zurück gesprungen.

Wir bei dem Vergleich im Verfahrensschritt 27 festgestellt, dass der Vergleichswert erreicht worden ist, wird zu einem nächsten Verfahrensschritt 28 gesprungen, in welchem einen Information über den erforderlichen Belagwechsel erzeugt und z.B. dem Fahrer des Fahrzeugs angezeigt wird. Dies kann durch Leuchtmittel, Textanzeige und/oder dgl. erfolgen.

Nach durchgeführtem Belagwechsel wird wieder mit dem Verfahrensschritt 23 begonnen.

Die Scheibenbremse kann druckluftbetätigt sein, aber auch andere Antriebsarten aufweisen.

Die Erfindung wird durch die oben beschriebenen Ausführungsbeispiele nicht eingeschränkt. Sie ist im Rahmen der beigefügten Ansprüche modifizierbar.

**Bezugszeichenliste**

| | |
|---|---|
| 1 | Scheibenbremse |
| 2 | Bremsscheibe |
| 2a | Bremsscheibenachse |
| 3, 3a | Bremsbelag |
| 4 | Bremsträger |
| 5 | Bremssattel |
| 5a | Zuspannabschnitt |
| 5b | Rückenabschnitt |
| 6, 6' | Spindeleinheit |
| 6a, 6'a | Spindelachse |
| 7, 7' | Gewindestempel |
| 7a, 7'a | Druckstück |
| 8 | Traverse |
| 8a | Rückstellfeder |
| 9 | Bremsdrehhebel |
| 10 | Verschleißnachstellvorrichtung |
| 11 | Synchroneinheit |
| 11a, 11'a | Synchronrad |
| 11b | Synchronmittel |
| 12 | Elektromotor |
| 12a | Motorwelle |
| 12b | Antriebsende |
| 12c | Antriebsritzel |
| 13 | Getriebe |
| 13a | Befestigungsabschnitt |
| 13b | Getriebeabschnitt |
| 13c | Sicherungsring |
| 14 | Planetenradträger |
| 14a, 14'a | Planetenrad |
| 14b | Sonnenrad |
| 15 | Abtriebselement |
| 15a | Planetenradträger |
| 15b | Koppelabschnitt |
| 16 | Spannhülse |
| 17 | Hülse |
| 18 | Motorgehäuse |
| 18a | Radialfixierung |
| 19 | Abdeckung |

20...28 Verfahrensschritt
130, 131 Getriebestufe
200...215 Teilschritt

**Patentansprüche**

1. Elektrische Verschleißnachstellvorrichtung (10) einer Scheibenbremse (1), insbesondere für ein Kraftfahrzeug, zur Nachstellung eines Reibflächenverschleißes an Bremsbelägen (3, 3a) und Bremsscheibe (2) einer Scheibenbremse (1), insbesondere für ein Kraftfahrzeug, mit einer Zuspannvorrichtung, vorzugsweise mit einem Bremsdrehhebel (9), wobei die elektrische Verschleißnachstellvorrichtung (10) umfasst:

   a) einen Elektromotor (12);
   b) ein Getriebe (13)
   c) ein Abtriebselement (15);
   **dadurch gekennzeichnet, dass**
   d) das Abtriebselement (15) mit einer Spannhülse (16) drehfest verbunden ist, wobei die Spannhülse (16) an ihrer Innenseite nach innen hervorstehende Längsrippen aufweist.

2. Elektrische Verschleißnachstellvorrichtung (10) nach Anspruch 1,
   **dadurch gekennzeichnet, dass**
   die Spannhülse (16) an ihrem freien Ende mit einem Eingriffsabschnitt ausgebildet ist, der einen Bestandteil einer drehfeste Kopplung der Spannhülse (16) mit einem ersten Synchronrad (11a) einer Synchroneinheit (11) der zuzuordnenden Scheibenbremse (1) bildet.

3. Elektrische Verschleißnachstellvorrichtung (10) einer Scheibenbremse (1), insbesondere für ein Kraftfahrzeug, zur Nachstellung eines Reibflächenverschleißes an Bremsbelägen (3, 3a) und Bremsscheibe (2) einer Scheibenbremse (1), insbesondere für ein Kraftfahrzeug, mit einer Zuspannvorrichtung, vorzugsweise mit einem Bremsdrehhebel (9), wobei die elektrische Verschleißnachstellvorrichtung (10) umfasst:

   a) einen Elektromotor (12);
   b) ein Getriebe (13)
   c) ein Abtriebselement (15);
   **dadurch gekennzeichnet, dass**
   e) das Abtriebselement (15) direkt mit einem Synchronrad (11a) drehfest verbunden ist, wobei das Synchronrad (11a) für einen drehfesten Eingriff mit einer Gewindespindel (7, 7') der zuzuordnenden Scheibenbremse (1) ausgebildet ist.

4. Elektrische Verschleißnachstellvorrichtung (10) nach Anspruch 3,
   **dadurch gekennzeichnet, dass**
   das Abtriebselement (15) mit dem Synchronrad (11a) einstückig ausgebildet ist.

5. Elektrische Verschleißnachstellvorrichtung (10) nach einem der vorhergehenden Ansprüche,
   **dadurch gekennzeichnet, dass**
   eine Motorwelle (12a) des Elektromotors (12) mit einem Antriebsritzel (12b) und das Abtriebselement (15) koaxial angeordnet sind.

6. Elektrische Verschleißnachstellvorrichtung (10) nach Anspruch 5,
   **dadurch gekennzeichnet, dass**
   das Getriebe (13) ein zweistufiges Planetengetriebe und/oder ein dreistufiges Planetengetriebe ist.

7. Elektrische Verschleißnachstellvorrichtung (10) nach Anspruch 6,
   **dadurch gekennzeichnet, dass**
   ein Gehäuse des Getriebes (13) einen Befestigungsabschnitt (13a) zur ortsfesten Befestigung in einem Bremssattel (5) der zuzuordnenden Scheibenbremse (1) und einen Getriebeabschnitt (13b), in welchem das zwei- oder dreistufige Planetengetriebe angeordnet ist, aufweist.

8. Elektrische Verschleißnachstellvorrichtung (10) nach Anspruch 7,

**dadurch gekennzeichnet, dass**
der Befestigungsabschnitt (13a) und der Getriebeabschnitt (13b) des Getriebes (13) einstückig ausgebildet sind, wobei der Getriebeabschnitt (13b) mit einer Innenverzahnung als Hohlrad des zweistufigen Planetengetriebes und/oder dreistufigen Planetengetriebes ausgebildet ist.

9.  Elektrische Verschleißnachstellvorrichtung (10) nach Anspruch 8,
    **dadurch gekennzeichnet, dass**
    eine erste Getriebestufe (130) des Getriebes (13) mit dem Antriebsritzel (12b) des Elektromotors (12) als Sonnenrad in Eingriff steht, wobei ein zweiter Planetenträger (15a) der zweiten Getriebestufe (131) des Getriebes (13) ein Bestandteil des Abtriebselementes (15) ist oder wobei ein dritter Planetenträger der dritten Getriebestufe ein Bestandteil des Abtriebselementes (15) ist.

10. Elektrische Verschleißnachstellvorrichtung (10) nach einem der vorhergehenden Ansprüche,
    **dadurch gekennzeichnet, dass**
    der Elektromotor (12) ein hohes Rastmoment aufweist.

11. Elektrische Verschleißnachstellvorrichtung (10) nach einem der vorhergehenden Ansprüche,
    **dadurch gekennzeichnet, dass**
    der Elektromotor (12) ein elektronisch kommutierter (EC) Elektromotor ist.

12. Elektrische Verschleißnachstellung (10) nach einem der vorhergehenden Ansprüche,
    weiterhin aufweisend ein Steuergerät, das mittels einer elektrischen Verbindung mit dem Elektromotor (12) verbunden ist,
    **wobei** das Steuergerät ausgebildet ist, Motorsignale auszuwerten und ein das aktuelle Lüftspiel repräsentierendes Signal bereitzustellen und/oder ein Lüftspielsteuersignal bereitzustellen.

13. Scheibenbremse (1), vorzugsweise druckluftbetätigt, insbesondere für ein Kraftfahrzeug, mit einer Zuspannvorrichtung, vorzugsweise mit einem Bremsdrehhebel (9), mindestens einer Spindeleinheit (6, 6') mit jeweils einem Gewindestempel (7, 7'), und mindestens einer elektrischen Verschleißnachstellvorrichtung (10) mit einer Steuereinheit,
    **dadurch gekennzeichnet, dass**
    die elektrische Verschleißnachstellvorrichtung (10) nach einem der vorhergehenden Ansprüche ausgebildet ist.

14. Scheibenbremse (1) nach Anspruch 13 in Verbindung mit Anspruch 1 oder Anspruch 2 oder einem der Ansprüche 5 bis 12 in Verbindung mit einem der Ansprüche 1 oder 2,
    **dadurch gekennzeichnet, dass**
    die Verschleißnachstellvorrichtung (10) über dem Gewindestempel (7) angeordnet ist, wobei die Spannhülse (16) auf den Gewindestempel (7) der mindestens einen Spindeleinheit (6) der Scheibenbremse (1) aufgesetzt ist und den Gewindestempel (7) mindestens teilweise umschließt.

15. Scheibenbremse (1), vorzugsweise druckluftbetätigt, insbesondere für ein Kraftfahrzeug, mit einer Zuspannvorrichtung, vorzugsweise mit einem Bremsdrehhebel (9), mindestens einer elektrischen Verschleißnachstellvorrichtung (10) mit einer Steuereinheit, eine erste Spindeleinheit (6) mit einem ersten Gewindestempel (7) und eine zweite Spindeleinheit (6') mit einem zweiten Gewindestempel (7'), wobei die Gewindestempel (7, 7') in einer Traverse (8) eingeschraubt sind, wobei die Traverse (8) mit der Zuspannvorrichtung, vorzugsweise mit dem Bremsdrehhebel (9), zusammenwirkt, und eine Synchroneinrichtung (11) mit Synchronrädern (11a, 11'a), die in der Traverse (8) angeordnet sind,
    **dadurch gekennzeichnet, dass**
    die Verschleißnachstellvorrichtung (10) nach einem der Ansprüche 1, 2 und 5 bis 12 ausgebildet ist und über dem ersten Gewindestempel (7) der ersten Spindeleinheit (6) angeordnet ist, wobei die Spannhülse (16) auf den ersten Gewindestempel (7) der ersten Spindeleinheit (6) aufgesetzt ist und den ersten Gewindestempel (7) mindestens teilweise umschließt, und wobei ein freies Ende der Spannhülse (16) mit einem Koppelabschnitt in einem ersten Synchronrad (11a) der Synchroneinheit (11) mit dem ersten Synchronrad (11a) drehfest gekoppelt ist.

16. Scheibenbremse nach Anspruch 15,
    **dadurch gekennzeichnet, dass**
    die nach innen hervorstehenden Rippen der Spannhülse (16) der Verschleißnachstellvorrichtung (10) mit Längsnuten des ersten Gewindestempels (7) in Eingriff stehen.

17. Scheibenbremse (1), vorzugsweise druckluftbetätigt, insbesondere für ein Kraftfahrzeug, mit einer Zuspannvorrichtung, vorzugsweise mit einem Bremsdrehhebel (9), mindestens einer elektrischen Verschleißnachstellvorrichtung (10) mit einer Steuereinheit, eine erste Spindeleinheit (6) mit einem ersten Gewindestempel (7) und eine zweite Spindeleinheit (6') mit einem zweiten Gewindestempel (7'), wobei die Gewindestempel (7, 7') in einer Traverse (8) eingeschraubt sind, wobei die Traverse (8) mit der Zuspannvorrichtung, vorzugsweise mit dem Bremsdrehhebel (9), zusammenwirkt, und eine Synchroneinrichtung (11) mit Synchronrädern (11a, 11'a), die in der Traverse (8) angeordnet sind,
**dadurch gekennzeichnet, dass**
die Verschleißnachstellvorrichtung (10) nach einem der Ansprüche 3 bis 12 ausgebildet ist und über dem ersten Gewindestempel (7) der ersten Spindeleinheit (6) angeordnet ist, wobei das Abtriebselement (15) den ersten Gewindestempel (7) mindestens teilweise umschließt, und wobei ein Koppelabschnitt (15b) des Abtriebselementes (15) mit einem ersten Synchronrad (11a) der Synchroneinheit (11) drehfest verbunden oder einstückig mit diesem ersten Synchronrad (11a) ausgebildet ist.

18. Verfahren zum Lüftspielmessen und Lüftspieleinstellen einer Scheibenbremse (1) nach einem der Ansprüche 13 bis 17,
**gekennzeichnet durch die Verfahrensschritte**

(S20) Bereitstellen der Verschleißnachstellvorrichtung (10) mit dem Elektromotor (12) und dem Getriebe (13);
(S21) Messen des aktuellen Lüftspiels und/oder Einstellen eines neuen Lüftspiels der Scheibenbremse (1); und
(S22) Kommunizieren mit weiteren Verschleißnachstellvorrichtungen eines zuzuordnenden Fahrzeugs über Datenschnittstellen und Überprüfen und Plausibilisieren der Messungen und Einstellungen.

19. Verfahren nach Anspruch 18,
**dadurch gekennzeichnet, dass**
der Verfahrensschritt (S21) Messen des aktuellen Lüftspiels und/oder Einstellen eines neuen Lüftspiels der Scheibenbremse (1) zumindest einen der folgenden Teilschritte aufweist:

(S210) Zuspannen des Bremsbelags (3, 3a) durch Einschalten des Elektromotors (12) in einer ersten Drehrichtung durch die Steuereinheit;
(S211) Zuspannen des Bremsbelags (3, 3a) bis der Bremsbelag (3, 3a) die Bremsscheibe (2) in einem Anlegepunkt kontaktiert;
(S212) Feststellen dieses Anlegepunktes bzw. dieses Kontaktierens durch Erfassen eines Stromanstiegs des Elektromotors (12), einen Kraftsensor, einen Abstandssensor oder/und einen Temperatursensor zur Erfassung einer Temperaturänderung auf der Oberfläche der Bremsscheibe (2) oder/und des Bremsbelags (3, 3a);
(S213) Anhalten der Drehbewegung des Elektromotors (12) nach Feststellen des Anlegepunktes und Berechnen des Lüftspiels mit Systemparametern;
(S214) Einschalten des Elektromotors (12) in einer zur ersten Drehrichtung gegenläufigen zweiten Drehrichtung und Verstellen des Bremsbelags (3, 3a) von der Bremsscheibe (2) weg in eine Position, welche dem berechneten Lüftspiel entspricht;
(S215) Speichern einer Abweichung bzw. der ausgeführten Rotation, sowohl im Uhrzeigersinn als auch gegen den Uhrzeigersinn, zur Berechnung des gesamten Drehwinkels zur Verschleißsensierung.

20. Verfahren zum Verschleißmessen einer Scheibenbremse (1) nach einem der Ansprüche 13 bis 17, wobei der Reibverschleiß von Bremsbelägen (3, 3a) und der Bremsscheibe (2) gemessen wird, **gekennzeichnet durch die Verfahrensschritte**

(S23) Festlegen einer Ausgangsstellung $X_{initial}$ des Bremsbelags (3, 3a) und Speicher der Ausgangsstellung $X_{initial}$ in der Steuereinheit;
(S24) Messen des Lüftspiels;
(S26) Berechnen des Reibverschleißes anhand der gemessenen Werte des Lüftspiels mit dem Gesamtdrehwinkel $\alpha_{overall}$, der Getriebeübersetzung i, dem aktuellen Lüftspiel LS und Spindelsteigung p nach folgender Rechenvorschrift

$$X_{wear} = x_{initial} - \alpha_{overall} * i * p + LS$$

(S27) Entscheiden **durch** Vergleich des berechneten Reibverschleißes mit einem vorher festgelegten Wert, ob ein Belagwechsel erforderlich ist, wobei in dem Fall, dass noch kein Belagwechsel erforderlich ist, zu dem Verfahrensschritt (S25) zurückgesprungen wird; und

(S28) Erzeugen einer Information über den erforderlichen Belagwechsel und Anzeigen und/oder Kommunizieren dieser Information.

21. Verfahren nach Anspruch 20,
    **dadurch gekennzeichnet, dass**
    im Verfahrensschritt (S24) Messen des Lüftspiels der Verfahrensschritt (S21) Messen des aktuellen Lüftspiels nach dem Verfahren nach Anspruch 18 bis 19 mit einer festgelegten Häufigkeit durchgeführt wird.

**Claims**

1. An electric wear adjustment device (10) of a disc brake (1), in particular for a motor vehicle, for adjusting friction surface wear on the brake pads (3, 3a) and brake disc (2) of a disc brake (1), in particular for a motor vehicle, having an application device, preferably a rotary brake lever (9), the electric wear adjustment device (10) comprising:

   a) an electric motor (12);
   b) a gear mechanism (13);
   c) an output element (15);
   **characterised in that**
   d) the output element (15) is connected rotationally conjointly to a clamping sleeve (16), the clamping sleeve (16) having inwardly projecting longitudinal ribs on its inside.

2. An electric wear adjustment device (10) according to claim 1,
   **characterised in that**
   the free end of the clamping sleeve (16) is designed with an engagement portion that forms a constituent part of a rotationally conjoint coupling of the clamping sleeve (16) to a first synchronising wheel (11a) of a synchronising unit (11) of the associated disc brake (1).

3. An electric wear adjustment device (10) of a disc brake (1), in particular for a motor vehicle, for adjusting friction surface wear on the brake pads (3, 3a) and brake disc (2) of a disc brake (1), in particular for a motor vehicle, having an application device, preferably a rotary brake lever (9), the electric wear adjustment device (10) comprising:

   a) an electric motor (12);
   b) a gear mechanism (13);
   c) an output element (15);
   **characterised in that**
   e) the output element (15) is connected directly, rotationally conjointly to a synchronising wheel (11a), the synchronising wheel (11a) being designed for rotationally conjoint engagement with a threaded spindle (7, 7') of the associated disc brake (1).

4. An electric wear adjustment device (10) according to claim 3,
   **characterised in that**
   the output element (15) is designed as one piece with the synchronising wheel (11a).

5. An electric wear adjustment device (10) according to any one of the preceding claims,
   **characterised in that**
   a motor shaft (12a) of the electric motor (12) is arranged coaxially with a drive pinion (12b) and the output element (15).

6. An electric wear adjustment device (10) according to claim 5,
   **characterised in that**
   the gear mechanism (13) is a two-stage planetary gear mechanism and/or a three-stage planetary gear mechanism.

7. An electric wear adjustment device (10) according to claim 6,
   **characterised in that**
   a housing of the gear mechanism (13) has a fastening portion (13a) for fastening the associated disc brake (1) in a fixed position in a brake calliper (5) and a gear portion (13b) in which the two-stage or three-stage planetary gear mechanism is arranged.

8. An electric wear adjustment device (10) according to claim 7,
   **characterised in that**
   the fastening portion (13a) and the gear portion (13b) of the gear mechanism (13) are formed as one piece, the gear portion (13b) being designed with internal toothing as a ring gear of the two-stage planetary gear mechanism and/or three-stage planetary gear mechanism.

9. An electric wear adjustment device (10) according to claim 8,
   **characterised in that**
   a first gear stage (130) of the gear mechanism (13) is in engagement with the drive pinion (12b) of the electric motor (12) as a sun gear, a second planet carrier (15a) of the second gear stage (131) of the gear mechanism (13) being a constituent part of the output element (15), or a third planet carrier of the third gear stage being a constituent part of the output element (15).

10. An electric wear adjustment device (10) according to any one of the preceding claims,
    **characterised in that**
    the electric motor (12) has a high cogging torque.

11. An electric wear adjustment device (10) according to any one of the preceding claims,
    **characterised in that**
    the electric motor (12) is an electronically commutated (EC) electric motor.

12. An electric wear adjustment device (10) according to any one of the preceding claims,
    further having a control unit that is connected by means of an electrical connection to the electric motor (12),
    the control unit being designed to evaluate motor signals and to provide a signal representing the air gap at a given point in time and/or to provide an air gap control signal.

13. A disc brake (1), preferably actuated by compressed air, in particular for a motor vehicle, having an application device, preferably a rotary brake lever (9), at least one spindle unit (6, 6') with a threaded plunger (7, 7') and at least one electric wear adjustment device (10) with a control unit,
    **characterised in that**
    the electric wear adjustment device (10) is designed according to any one of the preceding claims.

14. A disc brake (1) according to claim 13 in conjunction with claim 1 or claim 2 or any one of claims 5 to 12 in conjunction with either of claims 1 or 2,
    **characterised in that**
    the wear adjustment device (10) is arranged above the threaded plunger (7), the clamping sleeve (16) being mounted on the threaded plunger (7) of the at least one spindle unit (6) of the disc brake (1) and at least partially enclosing the threaded plunger (7).

15. A disc brake (1), preferably actuated by compressed air, in particular for a motor vehicle, having an application device, preferably a rotary brake lever (9), at least one electric wear adjustment device (10) with a control unit, a first spindle unit (6) with a first threaded plunger (7) and a second spindle unit (6') with a second threaded plunger (7'), the threaded plungers (7, 7') being screwed into a cross-member (8), the cross-member (8) interacting with the application device, preferably the rotary brake lever (9), and a synchronizing device (11) with synchronising wheels (11a, 11'a) that are arranged in the cross-member (8),
    **characterised in that**
    the wear adjustment device (10) is designed according to any one of claims 1, 2, and 5 to 12 and is arranged above the first threaded plunger (7) of the first spindle unit (6), the clamping sleeve (16) being mounted on the first threaded plunger (7) of the first spindle unit (6) and at least partially enclosing the first threaded plunger (7), and a free end of the clamping sleeve (16) being coupled rotationally conjointly to the first synchronising wheel (11a) by a coupling portion in a first synchronising wheel (11a) of the synchronising unit (11).

16. A disc brake according to claim 15,
    **characterised in that**
    the inwardly projecting ribs of the clamping sleeve (16) of the wear adjustment device (10) are in engagement with longitudinal grooves in the first threaded plunger (7).

17. A disc brake (1), preferably actuated by compressed air, in particular for a motor vehicle, having an application device, preferably a rotary brake lever (9), at least one electric wear adjustment device (10) with a control unit, a first spindle unit (6) with a first threaded plunger (7) and a second spindle unit (6') with a second threaded plunger (7'), the threaded plungers (7, 7') being screwed into a cross-member (8), the cross-member (8) interacting with the application device, preferably the rotary brake lever (9), and a synchronizing device (11) with synchronising wheels (11a, 11'a) that are arranged in the cross-member (8),
   **characterised in that**
   the wear adjustment device (10) is designed according to any one of claims 3 to 12 and is arranged above the first threaded plunger (7) of the first spindle unit (6), the output element (15) at least partially enclosing the first threaded plunger (7) and a coupling portion (15b) of the output element (15) being connected rotationally conjointly to a first synchronising wheel (11a) of the synchronising unit (11) or being formed in one piece with this first synchronising wheel (11a).

18. A method for measuring and for setting an air gap of a disc brake (1) according to any one of claims 13 to 17,
   **characterised by the following method steps:**

   (S20) the provision of the wear adjustment device (10) with the electric motor (12) and the gear mechanism (13);
   (S21) the measurement of the air gap at a given point in time and/or the setting of a new air gap of the disc brake (1); and
   (S22) communication with further wear adjustment devices of an associated vehicle via data interfaces, and the monitoring and performance of plausibility checks on these measurements and settings.

19. A method according to claim 18,
   **characterised in that**
   method step (S21), which involves the measurement of the air gap at a given point in time and/or the setting of a new air gap of the disc brake (1), has at least one of the following sub-steps:

   (S210) the application of the brake pad (3, 3a) by activation of the electric motor (12) in a first direction of rotation by means of the control unit;
   (S211) the application of the brake pad (3, 3a) until the brake pad (3, 3a) makes contact with the brake disc (2) at a contact point;
   (S212) the establishment of this contact point or this contact by detecting an increase in current of the electric motor (12) by means of a force sensor, a distance sensor and/or a temperature sensor for detecting a change in temperature on the surface of the brake disc (2) and/or of the brake pad (3, 3a);
   (S213) the stopping of the rotational movement of the electric motor (12) once the contact point has been established, and the calculation of the air gap using system parameters;
   (S214) the activation of the electric motor (12) in a second direction of rotation opposite the first direction of rotation and the adjustment of the brake pad (3, 3a) away from the brake disc (2) into a position corresponding to the air gap calculated;
   (S215) the storing of a deviation or of the rotation performed both clockwise and counter-clockwise to calculate the overall rotational angle for the purposes of sensing wear.

20. A method for measuring wear on a disc brake (1) according to any one of claims 13 to 17, the friction wear on the brake pads (3, 3a) and brake disc (2) being measured,
   **characterised by the following method steps:**

   (S23) the establishment of an initial position $X_{initial}$ of the brake pad (3, 3a) and the storage of the initial position $X_{initial}$ in the control unit;
   (S24) the measurement of the air gap;
   (S26) the calculation of the friction wear on the basis of the measured air gap values with the overall angle of rotation $\alpha_{overall}$, the gearing transmission ratio i, the air gap LS at a given point in time and the spindle pitch p according to the following calculation rule:

$$X_{wear} = X_{initial} - \alpha_{overall} * i * p + LS;$$

(S27) the decision as to whether or not a pad change is necessary by comparing the calculated friction wear with a pre-determined value, if a pad change is not yet necessary the method returning to method step (S25); and (S28) the generation of information regarding the necessary pad change and the displaying and/or communication of this information.

21. A method according to claim 20,
**characterised in that**
at method step (S24) involving the measurement of the air gap, the method step (S21) involving the measurement of the air gap at a given point in time is carried out at a defined frequency according to the method specified in Claims 18 and 19.

**Revendications**

1. Dispositif (10) électrique de rattrapage d'usure d'un frein (1) à disque, notamment d'un véhicule automobile, pour rattraper une usure de surface de frottement sur des garnitures (3, 3a) de frein et un disque (2) de frein d'un frein (1) à disque, notamment d'un véhicule automobile, comprenant un dispositif de serrage ayant, de préférence, un levier (9) tournant de frein, le dispositif (10) électrique de rattrapage d'usure comprenant :

   a) un moteur (12) électrique ;
   b) une transmission (13) ;
   c) un élément (15) mené ;
   **caractérisé en ce que**
   d) l'élément (15) mené est solidaire en rotation d'un manchon (16) de serrage, le manchon (16) de serrage ayant, sur sa face intérieure, des nervures longitudinales en saillie vers l'intérieur.

2. Dispositif (10) électrique d'usure suivant la revendication 1,
**caractérisé en ce que**
le manchon (16) de serrage est constitué, à son extrémité libre, en ayant une partie d'engrènement, qui forme une partie constitutive d'un accouplement de solidarité en rotation du manchon (16) de serrage à une première roue (11a) synchrone d'une unité (11) synchrone du frein (1) à disque à associer.

3. Dispositif (10) électrique de rattrapage d'usure d'un frein (1) à disque, notamment d'un véhicule automobile, pour rattraper une usure de surface de frottement sur des garnitures (3, 3a) de frein et un disque (2) de frein d'un frein (1) à disque, notamment d'un véhicule automobile, comprenant un dispositif de serrage ayant, de préférence, un levier (9) tournant de frein, le dispositif (10) électrique de rattrapage d'usure comprenant :

   a) un moteur (12) électrique ;
   b) une transmission (13) ;
   c) un élément (15) mené ;
   **caractérisé en ce que**
   e) l'élément (15) mené est solidaire en rotation directement d'une roue (11a) synchrone, la roue (11a) synchrone étant constituée pour un engrènement de solidarité en rotation avec une broche (7, 7') filetée du frein (1) à disque à associer.

4. Dispositif (10) électrique d'usure suivant la revendication 3,
**caractérisé en ce que**
l'élément (15) mené est constitué d'une seule pièce avec la roue (11a) synchrone.

5. Dispositif (10) électrique d'usure suivant l'une des revendications précédentes,
**caractérisé en ce qu'**
un arbre (12a) du moteur(12) électrique, par un pignon (12b) d'entraînement, et l'élément (15) mené, sont disposés coaxialement.

6. Dispositif (10) électrique d'usure suivant la revendication 5,
**caractérisé en ce que**
la transmission (13) est une transmission épicycloïdale à deux étages et/ou une transmission épicycloïdale à trois étages.

**7.** Dispositif (10) électrique d'usure suivant la revendication 6,
**caractérisé en ce qu'**
un carter de la transmission (13) a une partie (13a) de fixation pour la fixation à poste fixe dans un étrier (5) de frein du frein (1) à disque à associer et une partie (13b) de transmission, dans laquelle est montée la transmission épicycloïdale à deux étages ou à trois étages.

**8.** Dispositif (10) électrique d'usure suivant la revendication 7,
**caractérisé en ce que**
la partie (13a) de fixation et la partie (13b) de transmission de la transmission (13) sont constituées d'une seule pièce, la partie (13b) de transmission étant constituée en ayant une denture intérieure en roue à denture intérieure de la transmission épicycloïdale à deux étages et/ou de la transmission épicycloïdale à trois étage.

**9.** Dispositif (10) électrique d'usure suivant la revendication 8,
**caractérisé en ce qu'**un
premier étage (130) de la transmission (13) engrène avec le pignon (12b) d'entraînement du moteur (12) électrique comme roue solaire, une deuxième cage de transmission du deuxième étage (131) de la transmission (13) faisant partie de l'élément (15a) mené ou une troisième cage du troisième étage de transmission faisant partie de l'élément (15) mené.

**10.** Dispositif (10) électrique d'usure suivant l'une des revendications précédentes,
**caractérisé en ce que**
le moteur (12) électrique a un grand moment d'arrêt.

**11.** Dispositif (10) électrique d'usure suivant l'une des revendications précédentes,
**caractérisé en ce que**
le moteur (12) électrique est un moteur électrique à commutation électronique (EC).

**12.** Dispositif (10) électrique d'usure suivant l'une des revendications précédentes,
comportant, en outre, un appareil de commande, qui est relié au moteur (12) électrique au moyen d'une liaison électrique, dans lequel l'appareil de commande est constitué pour exploiter des signaux du moteur et pour mettre à disposition un signal représentant le jeu instantané des garnitures et/ou un signal de commande de jeu de garniture.

**13.** Frein (1) à disque, de préférence à actionnement à l'air comprimé, notamment d'un véhicule automobile, ayant un dispositif de serrage ayant, de préférence, un levier (9) tournant de frein, au moins une unité (6, 6') de broche ayant chacune un poinçon (7, 7') fileté et au moins un dispositif (10) électrique de rattrapage d'usure ayant une unité de commande,
**caractérisé en ce que**
le dispositif électrique de rattrapage d'usure est constitué suivant l'une des revendications précédentes.

**14.** Frein (1) à disque suivant la revendication 13 en liaison avec la revendication 1 ou la revendication 2 ou l'une des revendications 5 à 12 en liaison avec l'une des revendications 1 ou 2,
**caractérisé en ce que**
le dispositif (10) de rattrapage d'usure est monté par l'intermédiaire du poinçon (7) fileté, le manchon (16) de serrage étant mis sur le poinçon (7) fileté de la au moins une unité (6) de broche du frein (1) à disque et entourant, au moins en partie, le poinçon (7) fileté.

**15.** Frein (1) à disque, de préférence à actionnement par l'air comprimé, notamment d'un véhicule automobile, ayant un dispositif de serrage ayant de préférence un levier (9) tournant de frein, au moins un dispositif (10) électrique de rattrapage d'usure ayant une unité de commande, une première unité (6) de broche ayant un premier poinçon (7) fileté et une deuxième unité (6') de broche ayant un deuxième poinçon (7') fileté, les poinçons (7, 7') filetés étant vissés dans une traverse (8), la traverse (8) coopérant avec le dispositif de serrage, de préférence avec le levier (9) tournant de frein, et un dispositif (11) synchrone ayant des roues (11a, 11'a) synchrones, qui sont montées dans la traverse (8),
**caractérisé en ce que**
le dispositif (10) de rattrapage d'usure est constitué suivant l'une des revendications 1, 2 et 5 à 12 et est monté, par l'intermédiaire du premier poinçon (7) fileté de la première unité (6) de broche, le manchon (16) de serrage étant mis sur le premier poinçon (7) fileté de la première unité (6) de broche et entourant, au moins en partie, le premier poinçon (7) fileté, une extrémité libre du manchon (16) de serrage étant solidarisée en rotation, par une partie d'accouplement d'une première roue (11a) synchrone de l'unité (11) synchrone, avec la première roue (11a) synchrone.

**16.** Frein à disque suivant la revendication 15,
**caractérisé en ce que**
les nervures en saillie vers l'intérieur du manchon (16) de serrage du dispositif (10) de rattrapage d'usure engrènent avec des rainures longitudinales du premier poinçon (7) fileté.

**17.** Frein (1) à disque, de préférence à actionnement par l'air comprimé, notamment d'un véhicule automobile, ayant un dispositif de serrage ayant de préférence un levier (9) tournant de frein, au moins un dispositif (10) électrique de rattrapage d'usure ayant une unité de commande, une première unité (6) de broche ayant un premier poinçon (7) fileté et une deuxième unité (6') de broche ayant un deuxième poinçon (7') fileté, les poinçons (7, 7') filetés étant vissés dans une traverse (8), la traverse (8) coopérant avec le dispositif de serrage, de préférence avec le levier (9) tournant de frein, et un dispositif (11) synchrone ayant des roues (11a, 11'a) synchrones, qui sont montées dans la traverse (8),
**caractérisé en ce que**
le dispositif (10) de rattrapage d'usure est constitué suivant l'une des revendications 3 à 12 et est monté par l'intermédiaire du premier poinçon (7) fileté de la première unité (6) de broche, l'élément (15) mené entourant, au moins en partie, le premier poinçon (7) fileté et une partie (15b) d'accouplement de l'élément (15) mené étant solidarisée en rotation avec une première roue (11a) synchrone de l'unité (11) synchrone ou étant constituée d'une seule pièce avec cette première roue (11a) synchrone.

**18.** Procédé de mesure du jeu de garniture et de réglage du jeu de garniture d'un frein (1) à disque suivant l'une des revendications 13 à 17,
**caractérisé par** le stade de procédé

(S20) on se procure le dispositif (10) de réglage d'usure ayant le moteur (12) électrique et la transmission (13) ;
(S21) on mesure le jeu de garniture instantané et/ou règle un nouveau jeu de garniture du frein (1) à disque ; et
(S22) on communique avec d'autres dispositifs de réglage d'usure d'un véhicule associé par l'intermédiaire d'interfaces de données et on contrôle la vraisemblance des mesures et des réglages.

**19.** Procédé suivant la revendication 18,
**caractérisé en ce que**
le stade (S21) du procédé dans lequel on mesure le jeu de garniture instantané et/ou on règle un nouveau jeu de garniture du frein à disque a au moins l'un des sous-stades suivants :

(S210) serrage de la garniture (3, 3a) de frein par mise en circuit du moteur (12) électrique dans un premier sens de rotation par l'unité de commande ;
(S211) serrage de la garniture (3, 3a) de frein jusqu'à ce que la garniture (3, 3a) de frein soit en contact avec le disque (2) de frein en un point d'application ;
(S212) constatation de ce point de contact ou de cette mise en contact par détection d'une augmentation du courant du moteur (12) électrique, un capteur de force, un capteur de distance ou/et un capteur de température pour détecter une variation de la température à la surface du disque (2) de frein ou/et de la garniture (3, 3a) de frein ;
(S213) arrêt du mouvement de rotation du moteur (12) électrique après constatation du point d'application et calcul du jeu de garniture par des paramètres de système ;
(S214) mise en circuit du moteur (12) électrique dans un deuxième sens de rotation contraire au premier sens de rotation et éloignement de la garniture (3, 3a) de frein du disque (2) de frein jusqu'en une position, qui correspond au jeu de garniture calculé ;
(S215) mise en mémoire d'un écart ou de la rotation effectuée, tant dans le sens des aiguilles d'une montre, qu'également dans le sens contraire, pour le calcul de l'angle de rotation total, afin de rendre sensible l'usure.

**20.** Procédé de mesure de l'usure d'un frein (1) à disque suivant l'une des revendications 13 à 17, dans lequel on mesure l'usure de frottement de garnitures (3, 3a) de frein et du disque (2) de frein,
**caractérisé par** les stades de procédé

(S23) fixation d'une position $X_{initial}$ initiale de la garniture (3, 3a) de frein et mise en mémoire de la position $X_{initial}$ initiale dans l'unité de commande ;

(S24) mesure du jeu de garniture ;

(S26) calcul de l'usure de frottement au moyen des valeurs mesurées du jeu de garniture par l'angle $\alpha_{overall}$ de rotation totale de la démultiplication i de la transmission, le jeu LS de garniture instantanée et du pas p de broche suivant la prescription de calcul suivante

$$X_{wear} = X_{initial} - \alpha_{overall} * i * p + LS$$

(S27) décision par comparaison de la garniture de frottement calculée à une valeur fixée à l'avance du point de savoir si un changement de garniture est nécessaire, dans lequel, dans le cas où un changement de garniture n'est pas encore nécessaire, retour au stade (S25) du procédé ; et

(S28) production d'une information sur le changement de garniture nécessaire et affichage et/ou communication de cette information.

21. Procédé suivant la revendication 20,
**caractérisé en ce que**,
dans le stade (S24) du procédé, on effectue la mesure du jeu de garniture du stade (S21) de procédé mesure du jeu de garniture instantané par le procédé suivant la revendication 18 à 19 à une fréquence fixée.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012003506 A1
- DE 102004037771 A1
- DE 102012108672 B3
- DE 10252301 B4
- DE 19729024 C1